# EUROPÄISCHE PATENTANMELDUNG

(11) **EP 3 291 417 A1**
(43) Veröffentlichungstag der Anmeldung: **07.03.2018**
(21) Anmeldenummer: 16187204.9
(22) Anmeldetag: 05.09.2016
(51) Int. Cl.: H02K 3/24, H02K 3/51, H02K 9/06, H02K 1/32

(54) **ROTORWICKELKOPFVERBLOCKUNG MIT GASFÜHRUNG**

(71) Anmelder: Siemens Aktiengesellschaft, 80333 München (DE)
(72) Erfinder: Kowalski, Matthias, 45478 Mülheim an der Ruhr (DE)

(57) **Zusammenfassung**

Die Erfindung betrifft ein Verblockungselement (1) zur Anordnung zwischen zwei axial benachbarten Querleitern (104) eines Rotorwickelkopfes in einem Turbogenerator (100), aufweisend einen Leiter-Radialbereich (2) mit einer ersten Quererstreckung (6), und einen radial an den Leiter-Radialbereich angrenzenden Innen-Radialbereich (4) mit wenigstens einer zweiten Quererstreckung (8, 8_{M}), wobei die wenigstens eine zweite Quererstreckung größer ist als die erste Quererstreckung.

## Beschreibung

Die Erfindung betrifft ein Verblockungselement zur Anordnung zwischen zwei axial benachbarten Querleitern eines Rotorwickelkopfes in einem Turbogenerator, sowie einen Rotorwickelkopf und einen gasgekühlten Turbogenerator mit einer Mehrzahl solcher Verblockungselemente.

Turbogeneratoren unterliegen in ihrer Ausnutzbarkeit Grenzen, welche maßgeblich aus den Temperaturen der stromführenden Komponenten resultieren. Besonders bei Maschinen, deren Ständerwicklung direkt mit Wasser gekühlt wird, stellt die Erregerwicklung im Rotor die limitierende Größe dar.

Bekannt sind verschiedene Möglichkeiten, den Wickelkopf der Erregerwicklung mit vorbeiströmendem Gas zu kühlen. Eine davon ist die sogenannte "Thermosiphon"-Kühlung, deren Name daher rührt, dass man zum Entwicklungszeitpunkt davon ausgegangen war, dass die Dichteänderung aufgrund der Gaserwärmung in Verbindung mit den wirkenden Fliehkräften Gaswirbel zwischen den Querleitern der Erregerwicklung antreibt. Bei dieser Art der Kühlung stellen sich nämlich in den Kavitäten, die sich zwischen den Verblockungselementen und den Querleitern auftun, Strömungswirbel ein, welche die Querleiter des Rotorwickelkopfs konvektiv kühlen.

Den bekannten Ausführungen mit dieser Art der Kühlung ist gemein, dass sich die Verblockungselemente nicht nur im Radialbereich der Querleiter erstrecken, sondern auch von dort ausgehend weiter nach innen zum Rotor hin, um das durchströmende Gas in die Kavitäten zu bewegen.

Bei dieser Gestaltung ergibt sich eine sehr inhomogene Verteilung der maximal erreichbaren Wärmeübertragung zwischen dem vorbeiströmenden Gas und den Seitenflächen der Leiter, was für eine inhomogene Wärmeverteilung in den Leitern und damit zu unerwünschten Hotspots im Leitermaterial führt.

Eine Aufgabe der Erfindung ist daher die Bereitstellung eines Verblockungselements, das eine bessere Wärmeübertragung in den Kavitäten zwischen den Querleitern und den Verblockungselementen sicherstellt.

Ein erfindungsgemäßes Verblockungselement zur Anordnung zwischen zwei axial benachbarten Querleitern eines Rotorwickelkopfes in einem Turbogenerator weist auf: einen Leiter-Radialbereich mit einer ersten Quererstreckung und einen radial an den Leiter-Radialbereich angrenzenden Innen-Radialbereich mit wenigstens einer zweiten Quererstreckung. Erfindungsgemäß ist die wenigstens eine zweite Quererstreckung größer als die erste Quererstreckung.

Der Erfindung liegt unter anderem die Idee zugrunde, das Gas zur Kühlung nicht nur einfach ungerichtet in Verwirbelungen in den Kavitäten zu zwingen, beispielsweise indem in dem Innen-Radialbereich ein schmaler Dorn des Verblockungselements angeordnet ist; sondern das Verblockungselement in seinem Innen-Radialbereich gezielt so zu gestalten, dass es einen Gasstrom hin in die Kavitäten und gegebenenfalls wieder aus den Kavitäten heraus unterstützt. Dies kann gemäß einer bevorzugten Ausführung beispielsweise durch die Gestaltung einer Anströmfläche des Innen-Radialbereichs des Verblockungselements im Sinne einer Rampe, vorzugsweise einer gekrümmten Rampe, geschehen. Durch dieses aktive Einleiten von Kühlgas in die Kavität gelangt ein viel höherer Gasfluss in die Kavität, der noch dazu auch mit größerer Geschwindigkeit durch die Kavität strömt. Resultat ist eine deutlich höhere Wärmeübertragung zwischen den zu kühlenden Querleitern und dem durch die Kavität strömenden Kühlgas. Zudem sorgt die gerichtete Umlenkung des Gasstroms in die Kavität für eine deutlich homogenere Verteilung der Wärmeübertragungsfähigkeit an den Seitenflächen der Querleiter.

Um das zur Verfügung stehende Maß an Wärmeübertragung zu optimieren, ist gemäß einer bevorzugten Ausführung ein Übergang zwischen dem Leiter-Radialbereich und dem Innen-Radialbereich in einem montierten Zustand des Verblockungselements an einem radial inneren Rand der Querleiter angeordnet. Dadurch ist beispielsweise sichergestellt, dass die größere Quererstreckung des Verblockungselements im Innen-Radialbereich nicht zu Lasten der kühlbaren Querleiterfläche geht.

In einer alternativ bevorzugten Ausführung kann aber auch vorgesehen sein, dass der Übergang zwischen den Leiter-Radialbereich und dem Innen-Radialbereich in einem montierten Zustand des Verblockungselements radial weiter außen als an einem radial inneren Rand der Querleiter angeordnet ist. Eine derartige Gestaltung kann dabei helfen, die für einen ausreichenden Fluidfluss in die Kavitäten benötigte Radialerstreckung des Verblockungselements in den ansonsten freien Radialbereich zwischen der Ständerwicklung und dem Rotor zu verringern, was gegebenenfalls den Verlustwiderstand des Turbogenerators senken kann.

Für die Gestaltung der zweiten Quererstreckung gibt es im Sinne der Erfindung mehrere unterschiedliche Möglichkeiten, denen vorzugsweise gemein ist, dass sie das anströmende Kühlgas aktiv in die Kavität umlenken. Gemäß einer ersten Ausführung weist der Innen-Radialbereich entlang seiner gesamten Radialerstreckung einen gleichbleibenden Wert für die Quererstreckung auf. Ein solches Verblockungselement ist sehr einfach zu fertigen. Gemäß einer weiteren Ausführung nimmt die zweite Quererstreckung von dem Übergang zwischen dem Leiter-Radialbereich und dem Innen-Radialbereich ausgehend in mehreren Stufen zu, so dass an einem radial inneren Ende des Verblockungselements der größte Wert der Quererstreckung vorliegt. Gemäß einer dritten Ausführung nimmt die zweite Quererstreckung von dem Übergang ausgehend bis hin zu einem radial inneren Ende des Verblockungselements entlang einer Kurve, insbesondere entlang einem Radius (also ohne diskrete Stufen) zu. Diese Ausführung ermöglicht eine möglichst laminare Gasführung und maximiert zudem die in die Kavität eingeführte Menge von Kühlgas ebenso wie die Geschwindigkeit des Kühlgases.

Bei Turbogeneratoren in üblichen Baugrößen weist das Verblockungselement gemäß einer bevorzugten Ausführung eine erste Quererstreckung von ca. 25 mm auf. Je nach Größe des Turbogenerators und je nach Geschwindigkeit der Kühlgas-Anströmung können unterschiedliche Werte für die zweite Quererstreckung im Sinne der Erfindung bevorzugt sein. Vorzugsweise ist die zweite Quererstreckung um maximal 5 mm, um maximal 10 mm, um maximal 20 mm oder um maximal 40 mm größer als die erste Quererstreckung.

Im Sinne der Erfindung ist unter dem Begriff "zweite Quererstreckung" nicht zwingend ein fixer Wert für die Quererstreckung entlang des gesamten Innen-Radialbereichs zu verstehen. Vielmehr kann die zweite Quererstreckung auch eine ausgehend von dem Übergang zwischen Leiter-Radialbereich und Innen-Radialbereich stufenweise und/oder entlang einer Querschnitts-Kurve größer werdende zweite Quererstreckung beschreiben. Im Sinne der Erfindung wird dann als zweite Quererstreckung der maximale Erstreckungswert angegeben.

Gemäß einer bevorzugten Ausführung weist der Innen-Radialbereich nur auf einer Seite einer radial verlaufenden Mittelebene des Verblockungselements eine größere Quererstreckung auf als der Leiter-Radialbereich. Eine solche Ausführung ist auf eine optimierte Einleitung von Kühlgas in die Kavität hin optimiert.

Gemäß einer alternativ bevorzugten Ausführung weist hingegen der Innen-Radialbereich auf den beiden Seiten einer radial verlaufenden Mittelebene des Verblockungselements eine größere Quererstreckung auf als der Leiter-Radialbereich.

Je nach Strömungsverhältnissen an den mit Kühlgas zu beschickenden Kavitäten kann vorgesehen sein, dass das Verblockungselement auf der einen Seite der Mittelebene eine stärker vergrößerte Quererstreckung aufweist als auf der anderen Seite der Mittelebene. Beispielsweise kann eine Rampe zum Einführen von Kühlgas in die Kavität mit einer stärker vergrößerten Quererstreckung ausgebildet sein als eine Rampe zum Ausleiten des Kühlgases auf der der Anströmseite abgewandten Seite des Verblockungselements.

Gemäß einer anderen bevorzugten Ausführung ist aber zum Erreichen einer möglichst homogenen Kühlgas-Strömung der Innen-Radialbereich bezüglich der radial verlaufenden Mittelebene des Verblockungselements symmetrisch ausgebildet. Das bedeutet insbesondere, dass eine gemäß bevorzugter Ausführung mit einem bestimmten Kurvenquerschnitt gebildete Kühlgas-Rampe im Innen-Radialbereich auf beiden Seiten der Mittelebene im Wesentlichen gleich ausgebildet ist.

Gemäß einem weiteren Aspekt der Erfindung wird ein Rotorwickelkopf eines gasgekühlten Turbogenerators bereitgestellt, bei dem zwischen je zwei Querleitern eine Mehrzahl von Verblockungselementen im Sinne einer Ausführung der Erfindung entlang des Umfangs des Querleiters, insbesondere mit zueinander gleicher Beabstandung angeordnet sind.

Gemäß einem weiteren Aspekt wird ein gasgekühlter Turbogenerator mit einem Rotorwickelkopf im Sinne der Erfindung bereitgestellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei zeigt:
- Figur 1: in einer Draufsicht ein Verblockungselement gemäß einer Ausführung der Erfindung, wobei in einem eingebauten Zustand eine Senkrechte auf die Zeichenebene einer Längsachse des Turbogenerators entspricht; und
- Figur 2: in einer Schnittansicht ein Ausschnitt eines Turbogenerators mit mehreren äquidistant angeordneten Verblockungselementen zur Anordnung zwischen zwei axial benachbarten Querleitern des Rotorwickelkopfs.

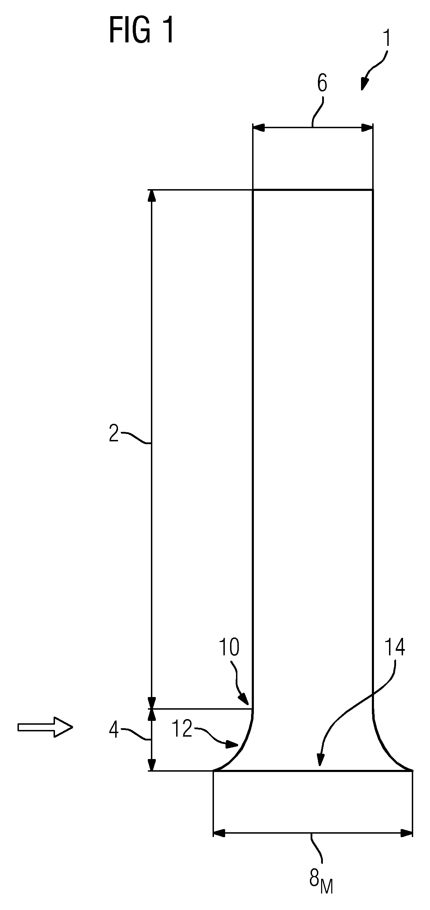

In Figur 1 ist ein Verblockungselement 1 zur Anordnung zwischen zwei axial benachbarten Querleitern eines Rotorwickelkopfes in einem Turbogenerator dargestellt. In seiner Einbauumgebung (sprich im montierten Zustand) im Turbogenerator ist das Verblockungselement 1 so angeordnet, dass sich ein Leiter-Radialbereich 2 des Verblockungselements 1 entlang der gesamten radialen Erstreckung der benachbarten Querleiter erstreckt. Hingegen reicht ein Innen-Radialbereich 4 ausgehend vom Leiter-Radialbereich hinein in den ansonsten freien Hohlraum zwischen den Querleitern und einem Rotor des Turbogenerators. In dem Leiter-Radialbereich 2 weist das Verblockungselement eine konstante erste Quererstreckung 6 auf, wobei statt dem Begriff Quererstreckung auch synonym der Begriff Umfangserstreckung verwendet werden kann, der sich auf den Einbau der Verblockungselemente 1 entlang des Umfangs der Ständerwicklung des Turbogenerators bezieht.

Der Innen-Radialbereich 4 erstreckt sich in den Hohlraum zwischen den Querleitern und dem Rotor des Turbogenerators, der zugleich der Anströmraum für das Kühlgas ist. Die Verblockungselemente 1 werden also so eingebaut, dass sie in der Darstellung von Figur 1 auf der einen Seite des Innen-Radialbereichs mit Kühlgas angeströmt werden; hier beispielsweise von der linken Seite. Dies ist in Figur 1 mit dem zweistrahligen Pfeil dargestellt.

Um nun das Kühlgas im Sinne der Erfindung besser zu den zu kühlenden Querleitern leiten zu können, ist das Verblockungselement 1 im Innen-Radialbereich 4 mit einer zweiten Quererstreckung 8 ausgebildet, die sich im Ausführungsbeispiel ausgehend von einem Übergang 10 entlang einer Kurve 12 stetig bis zu einer maximalen zweiten Quererstreckung 8M ausbildet. Das Verblockungselement 1 weist seine maximale zweite Quererstreckung 8M an einem radial inneren Ende 14 des Verblockungselements 1 auf.

Durch die stetige Gestaltung der Kurve 12 verbunden mit der maximalen zweiten Quererstreckung 8M kann ein Teil des Gasstroms vom Hauptgasstrom abgetrennt und im montierten Zustand in eine Kavität zwischen zwei benachbarten Querleitern und zwei Verblockungselementen eingeführt werden. Die Umlenkung an der Krümmung der Kurve 12 erfolgt wegen deren Stetigkeit verhältnismäßig laminar, weshalb das anströmende Kühlgas in großer Menge und mit großer Geschwindigkeit in die Kavität eingeführt werden kann.

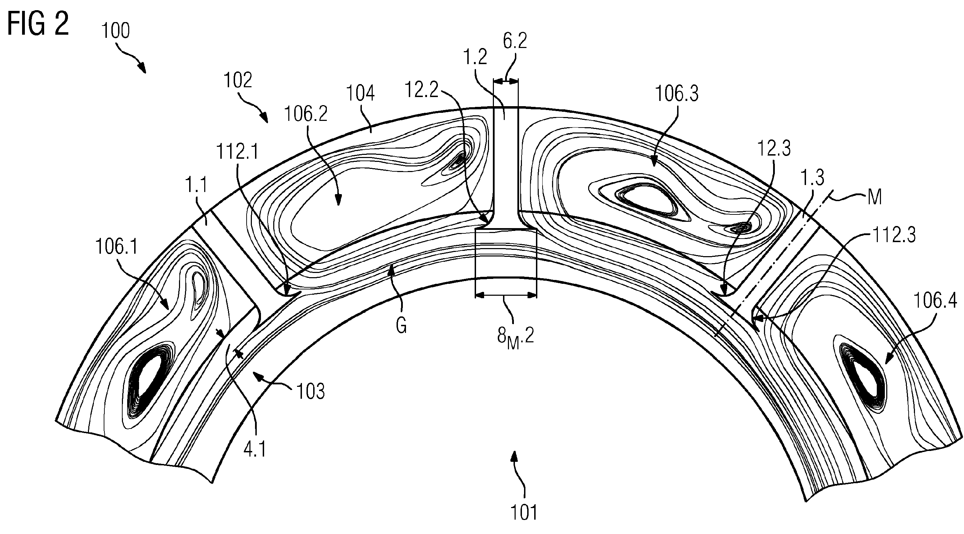

In Figur 2 ist eine beispielhafte Einbauumgebung von Verblockungselementen (gemäß Figur 1 oder gemäß anderen Ausführungen der Erfindung) dargestellt: Gezeigt ist ein Ausschnitt aus dem Umfang eines Turbogenerators 100, der einen innenliegenden Rotor 101 und einen außenliegenden Stator 102 aufweist. Teil der Ständerwicklung des Stators 102 sind Querleiter 104, wobei in der Schnittansicht von Figur 2 die Verblockungselemente 1 den Querleiter 104 und einen nicht dargestellten Querleiter verblocken, der oberhalb der Zeichenebene angeordnet ist.

Aus der Darstellung der Figur 2 ist ersichtlich, dass sich der Innen-Radialbereich 4 in einen radialen Zwischenhohlraum zwischen dem Rotor 101 und den Querleitern 104 befindet. Durch das Hineinreichen des Innen-Radialbereichs 4 in den Gasanströmraum im Hohlraum 103 entfaltet die im Verhältnis zu der ersten Quererstreckung 6 größere zweite Quererstreckung 8M ihre Wirkung im Umlenken des Gasstroms in eine Kavität 106, die sich zwischen jeweils zwei Verblockungselementen 1 und quer dazu zwischen jeweils zwei Querleitern bildet.

Die so gebildete Kavität kann durch den im Sinne der Erfindung erreichbaren größeren Gasfluss deutlich besser gekühlt werden als nach dem Stand der Technik. Aus den dargestellten Stromlinien G ist ersichtlich, dass die Umlenkung entlang der stetigen Eingangskurve 12 jedes Verblockungselements 1 und entlang der symmetrisch ausgebildeten stetigen Ausgangskurve 112 für einen verhältnismäßig laminaren Gasstrom durch die Kavität sorgt.

Die Symmetrie der Kurven 12 und 112 ist beispielhaft am Verblockungselement 1.3 durch die eingezeichnete Mittelebene M verdeutlicht, die mit einer Strichpunktlinie eingezeichnet ist und die Zeichenebene senkrecht schneidet.

## Patentansprüche

1. Verblockungselement (1) zur Anordnung zwischen zwei axial benachbarten Querleitern (104) eines Rotorwickelkopfes in einem Turbogenerator (100), aufweisend
- einen Leiter-Radialbereich (2) mit einer ersten Quererstreckung (6), und
- einen radial an den Leiter-Radialbereich angrenzenden Innen-Radialbereich (4) mit wenigstens einer zweiten Quererstreckung (8, 8_{M}),
**dadurch gekennzeichnet, dass**
die wenigstens eine zweite Quererstreckung größer ist als die erste Quererstreckung.

2. Verblockungselement gemäß Anspruch 1,
wobei ein Übergang (10) zwischen dem Leiter-Radialbereich und dem Innen-Radialbereich an einem radial inneren Rand der Querleiter angeordnet ist.

3. Verblockungselement gemäß Anspruch 1,
wobei ein Übergang (10) zwischen dem Leiter-Radialbereich und dem Innen-Radialbereich radial weiter außen als an einem radial inneren Rand der Querleiter angeordnet ist.

4. Verblockungselement gemäß einem der vorherigen Ansprüche 2 oder 3,
wobei die zweite Quererstreckung von diesem Übergang ausgehend bis hin zu einem radial inneren Ende (14) des Verblockungselements entlang einer Kurve (12), insbesondere einem Radius, und/oder mit mehreren Stufen zunimmt.

5. Verblockungselement gemäß einem der vorherigen Ansprüche,
wobei eine zweite Quererstreckung um, insbesondere maximal, 5 mm, 10 mm, 20 mm oder 40 mm größer ist als die erste Quererstreckung.

6. Verblockungselement gemäß einem der vorherigen Ansprüche,
wobei der Innen-Radialbereich nur auf einer Seite einer radial verlaufenden Mittelebene (M) des Verblockungselements eine größere Quererstreckung aufweist als der Leiter-Radialbereich.

7. Verblockungselement gemäß einem der vorherigen Ansprüche 1 bis 5,
wobei der Innen-Radialbereich auf den beiden Seiten einer radial verlaufenden Mittelebene (M) des Verblockungselements eine unterschiedlich größere Quererstreckung aufweist als der Leiter-Radialbereich.

8. Verblockungselement gemäß einem der vorherigen Ansprüche 1 bis 5,
wobei der Innen-Radialbereich bezüglich einer radial verlaufenden Mittelebene (M) des Verblockungselements symmetrisch ausgebildet ist.

9. Rotorwickelkopf eines gasgekühlten Turbogenerators,
bei dem zwischen je zwei Querleitern eine Mehrzahl von Verblockungselementen gemäß einem der vorherigen Ansprüche entlang des Umfangs des Querleiters, insbesondere gleich beabstandet, angeordnet sind.

10. Gasgekühlter Turbogenerator (100) mit einem Rotorwickelkopf gemäß Anspruch 9.
